# EUROPÄISCHE PATENTSCHRIFT

(11) **EP 3 728 946 B1**
(45) Veröffentlichungstag und Bekanntmachung des Hinweises auf die Patenterteilung: **15.06.2022**
(21) Anmeldenummer: 18795967.1
(22) Anmeldetag: 23.10.2018
(51) Int. Cl.: F23D 3/40, F23D 11/44, F23D 5/04

(54) **VERDAMPFERBAUGRUPPE, INSBESONDERE FÜR EIN BRENNSTOFFBETRIEBENES FAHRZEUGHEIZGERÄT, UND FAHRZEUGHEIZGERÄT**
EVAPORATOR UNIT, PARTICULARLY FOR A FUEL-OPERATED VEHICLE HEATER, AND VEHICLE HEATER
MODULE D'ÉVAPORATEUR, EN PARTICULIER POUR UN APPAREIL DE CHAUFFAGE DE VÉHICULE UTILISANT UN COMBUSTIBLE, ET APPAREIL DE CHAUFFAGE DE VÉHICULE

(30) Priorität: 22.12.2017 DE 102017131181
(43) Veröffentlichungstag der Anmeldung: 28.10.2020
(73) Patentinhaber: Webasto SE, 82131 Stockdorf (DE)
(72) Erfinder: MÖSL, Klaus, 82131 Stockdorf (DE); MEIER, Bengt, 82131 Stockdorf (DE); DELL, Vitali, 82131 Stockdorf (DE); STEFFENS, Jan, 82131 Stockdorf (DE)
(74) Vertreter: Schumacher & Willsau
(86) Internationale Anmeldenummer: PCT/EP2018/079013
(87) Internationale Veröffentlichungsnummer: WO 2019/120692

(56) Entgegenhaltungen:
- EP-A2- 2 538 135
- DE-A1-102013 220 655
- DE-A1-102016 108 041
- DE-B3- 10 252 888
- DE-B3-102012 111 289

## Beschreibung

Beschrieben wird eine Verdampferbaugruppe, insbesondere für ein brennstoffbetriebenes Fahrzeugheizgerät, gemäß Oberbegriff von Anspruch 1.

Brennstoffbetriebene Fahrzeugheizgeräte umfassen häufig eine Verdampferbaugruppe, in der aus flüssigem Brennstoff und Luft ein brennbares Brennstoff-Luft-Gemisch erzeugt wird, wobei der zunächst flüssige Brennstoff verdampft wird. Die Güte des erzeugten Brennstoff-Luft-Gemischs trägt wesentlich zur Einhaltung immer strengerer Abgasvorschriften bei. Gleichzeitig ist selbstverständlich ein möglichst simpler Aufbau der Verdampferbaugruppe wünschenswert, um eine kostengünstig herzustellende und zuverlässige Verdampferbaugruppe bereitstellen zu können.

Eine gattungsgemäße Verdampferbaugruppe ist bereits aus der DE 10 2012 111 289 B3 vorbekannt. Ferner beschreiben die DE 102 52 888 B3, die DE 10 2016 108 041 A1 und die DE 10 2013 220655 A1 ein plattenartiges Niederhalteelement einer Verdampferbaugruppe. Aus der EP 2 538 135 A2 ist noch eine Verdampferbaugruppe vorbekannt, bei der ein Zündorgan in ein Aufbaumaterial einer Bodenwandung eingebettet ist.

Beschrieben wird eine gattungsgemäße Verdampferbaugruppe insbesondere für ein brennstoffbetriebenes Fahrzeugheizgerät. Die gattungsgemäße Verdampferbaugruppe umfasst eine topfartige Verdampferaufnahme, einen in die topfartige Verdampferaufnahme eingelegten Verdampferkörper, und ein plattenartig ausgebildetes Niederhalteelement, das an der Verdampferaufnahme fixiert ist und den Verdampferkörper in der Verdampferaufnahme festlegt. Es ist vorgesehen, dass das plattenartig ausgebildete Niederhalteelement zumindest eine Halteklaue aufweist. Aufbauend auf der gattungsgemäßen Verdampferbaugruppe ist erfindungsgemäß vorgesehen, dass die zumindest eine Halteklaue auf einer Oberseite des plattenartig ausgebildeten Niederhalteelementes ein oberes Teil aufweist und auf einer Unterseite des plattenartig ausgebildeten Niederhalteelementes ein unteres Teil aufweist, wobei das obere Teil und das untere Teil von dem plattenartig ausgebildeten Niederhaltelement fort weisen. Die zumindest eine Halteklaue ist also derart ausgebildet, dass sie auf der Oberseite des plattenartig ausgebildeten Niederhaltelementes ein oberes Teil aufweist, welches erhaben über die Oberseite hinaus ragt und auf der Unterseite ein unteres Teil aufweist, das auf der Unterseite erhaben über die Unterseite hinaus ragt. Auf diese Weise kann, unabhängig davon, ob die Oberseite des plattenartig ausgebildeten Niederhalteelementes oder die Unterseite des plattenartig ausgebildeten Niederhalteelementes während der Montage in Richtung auf den eingelegten Verdampferkörper weist, eine zuverlässige und positionsgenaue Fixierung des Verdampferkörpers gewährleistet werden. Eine versehentliche "falsche" Montage des Niederhalteelementes, beispielsweise durch Vertauschen von Ober- und Unterseite hat keine nachteiligen Auswirkungen. Die zumindest eine Halteklaue kann ein Verrutschen oder Wandern des Verdampfers in der Verdampferaufnahme unterbinden. Zugleich kann eventuell auf das Vorsehen eines zusätzlichen Toleranzausgleichskörpers in der Verdampferaufnahme verzichtet werden, was den Aufbau der Verdampferbaugruppe vergleichsweise einfach hält. Auch anderweitige zusätzliche Fixierungen des Verdampferkörpers in der Verdampferaufnahme können entfallen. Die zumindest eine Halteklaue kann mit ihrem von dem plattenartig ausgebildeten Niederhalteelement fortweisenden Teil, welches während der Montage des Niederhalteelementes in Richtung auf den eingelegten Verdampferkörper weist, lokal in den Verdampferkörper eindringen oder zumindest gegen dessen Oberfläche drücken und dabei eine fixierende Kraft auf den Verdampferkörper in der Verdampferaufnahme ausüben. Die genaue Eindringtiefe der zumindest einen Halteklaue ist insbesondere von der tatsächlichen Dicke und Dichte des Verdampferkörpers sowie der Länge der mindestens einen Halteklaue abhängig, so dass die zumindest eine Halteklaue insofern toleranzausgleichend wirken kann. Ein Innendurchmesser des plattenartig ausgebildeten Niederhalteelementes kann zwischen 22 und 68 mm, vorzugsweise etwa 33 mm betragen. Ein Außendurchmesser des plattenartig ausgebildeten Niederhalteelementes kann zwischen 28 und 80 mm, vorzugsweise etwa 42 mm betragen. Eine Länge der mindestens einen Halteklaue kann zwischen 0,5 und 8 mm, vorzugsweise zwischen 1 und 6 mm betragen. Besonders bevorzugt ist eine Länge der mindestens einen Halteklaue zwischen 2 und 4 mm. Das obere Teil und das untere Teil der mindestens einen Halteklaue können direkt nebeneinander angeordnet sein. Alternativ ist es auch möglich, dass das obere Teil und das untere Teil beabstandet voneinander angeordnet sind. Das obere Teil und das untere Teil können aus zunächst in der Ebene des übrigen Niederhaltelementes erzeugt werden, beispielsweise durch das Verdrehen einer Lasche, das Verklinken einer Lasche oder das doppelte Verklinken einer gespaltenen Lasche oder das abwechselnde Prägen eines Innenrandes des Niederhaltelementes.

Nützlicherweise kann vorgesehen sein, dass das plattenartig ausgebildete Niederhalteelement mit der Verdampferaufnahme stoffschlüssig verbunden ist oder gegen die Verdampferaufnahme verstemmt ist. Auf diese Weise können die Verdampferaufnahme, der Verdampferkörper und das Niederhalteelement dauerhaft und zuverlässig miteinander verbunden sein, so dass insbesondere auch während des Betriebs der Verdampferbaugruppe und der damit einhergehenden thermischen Zyklen eine dauerhafte und zuverlässige korrekte Positionierung des Verdampferkörpers in der Verdampferaufnahme erreicht wird. Die stoffschlüssige Verbindung kann beispielsweise durch Verschweißen oder Verlöten realisiert werden.

Vorteilhafterweise kann vorgesehen sein, dass das plattenartig ausgebildete Niederhalteelement im Wesentlichen ringscheibenförmig ist. Das plattenartig ausgebildete Niederhalteelement kann auf diese Weise die zu einer Brennkammer hin sichtbare Oberfläche des Verdampferkörpers, an der Brennstoff in gasförmigem Zustand austritt, definieren, beispielsweise durch das freibleibende Innere der Ringscheibe. Die Verdampferbaugruppe selbst kann im Wesentlichen rotationssymmetrisch aufgebaut sein, was die Montage der Verdampferbaugruppe einfach hält, da ein "Verdrehen" der zu montierenden Komponenten keine negativen Auswirkungen zeigt. Wenn das plattenartig ausgebildete Niederhalteelement im Wesentlichen ringscheibenförmig ist, kann dieses sowohl als offene als auch als geschlossene Ringscheibe ausgebildet sein. Eine offene Ausgestaltung der Ringscheibe erlaubt eine definierte Ausrichtung des Niederhalteelementes relativ zu der Verdampferaufnahme, was insbesondere im Hinblick auf die relative Lage der mindestens einen Halteklaue vorteilhaft sein kann.

Es kann vorgesehen sein, dass das untere Teil der zumindest einen Halteklaue an dem Verdampferkörper in der Verdampferaufnahme anliegt und/oder in den Verdampferkörper eindringt. Durch das Eindringen und/oder Anliegen des unteren Teils der zumindest einen Halteklaue an den Verdampferkörper wird eine zuverlässige dauerhafte Fixierung des Verdampferkörpers in der Verdampferaufnahme gewährleistet.

Weiterhin kann vorgesehen sein, dass das obere Teil und das untere Teil die gleiche Form haben. Insbesondere kann das obere und das untere Teil eine bezüglich eines Symmetriepunktes punktsymmetrische Kontur aufweisen, so dass eine Montage des Niederhalteelementes wahlweise mit der Oberseite in Richtung des Verdampferkörpers oder mit der Unterseite in Richtung des Verdampferkörpers erfolgen kann und in beiden Fällen gleiche Ergebnisse erzielt werden.

Beschrieben ist weiterhin ein brennstoffbetriebenes Fahrzeugheizgerät mit einer solchen Verdampferbaugruppe.

Die vorliegende Erfindung wird im Folgenden anhand bevorzugter Ausgestaltungen beispielhaft erläutert.

Es zeigen:
- Figur 1: eine erste seitliche Schnittansicht eines Brenners;
- Figur 2: eine zweite seitliche Schnittansicht eines Brenners;
- Figur 3: eine schematische Draufsicht auf ein Niederhalteelement;
- Figur 4a: eine erste seitliche Schnittansicht eines Niederhalteelementes;
- Figur 4b: eine zweite seitliche Schnittansicht eines Niederhalteelementes;
- Figur 4c: eine dritte seitliche Schnittansicht eines Niederhalteelementes;
- Figur 5: eine erste dreidimensionale Explosionsdarstellung einer Verdampferbaugruppe;
- Figur 6: eine zweite dreidimensionale Explosionsdarstellung einer Verdampferbaugruppe;
- Figur 7: eine dritte dreidimensionale Explosionsdarstellung einer Verdampferbaugruppe; und
- Figur 8: eine schematische Darstellung eines Fahrzeugs mit einem Fahrzeugheizgerät.

In den folgenden Zeichnungen bezeichnen gleiche Bezugszeichen gleiche oder gleichartige Teile.

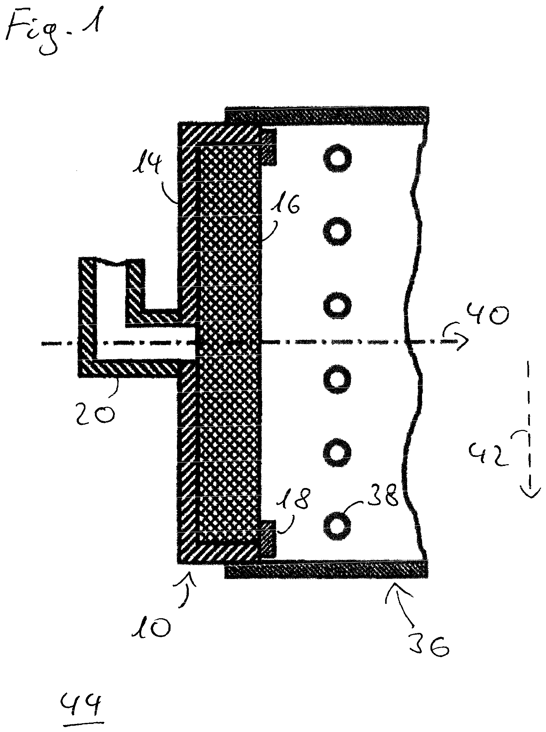

Figur 1 zeigt eine erste seitliche Schnittansicht eines Brenners 44. Der Brenner 44 umfasst eine Verdampferbaugruppe 10, an die ein Brennrohr 36 angesetzt ist, so dass sich der Brenner 44 im Wesentlichen entlang der axialen Richtung 40 erstreckt. Das Brennrohr 36 weist Luftdurchlässe 38 auf, an denen Verbrennungsluft in den Bereich direkt oberhalb der Verdampferbaugruppe 10 übertritt und sich mit dem dort verdampften Brennstoff mischt. Das Brennrohr 36 umgibt in einer radialen Richtung 42 senkrecht zu der axialen Richtung 40 die Verdampferbaugruppe 10 vollständig. Die Verdampferbaugruppe 10 umfasst eine topfartig ausgeformte Verdampferaufnahme 14, in die ein Verdampferkörper 16 eingelegt ist. An einem Boden der topfartig ausgebildeten Verdampferaufnahme befindet sich eine Öffnung, über welche Brennstoff durch die an der Öffnung vorgesehene Brennstoffzuführung 20 in den Verdampferkörper 16 eintreten kann. Der Verdampferkörper 16 ist mit Hilfe eines Niederhalteelementes 18 in der Verdampferaufnahme 14 fixiert. Das Niederhalteelement 18 erstreckt sich in der radialen Richtung 42 vom äußeren Rand der Verdampferaufnahme 14 in Richtung auf dessen Mitte und ist im Wesentlichen plattenförmig ausgebildet. Das Niederhalteelement 18 kann beispielsweise mit dem oberen Rand der Verdampferaufnahme 14 verlötet oder verschweißt sein. Das Niederhalteelement 18 kann beispielsweise kreisringförmig ausgebildet sein.

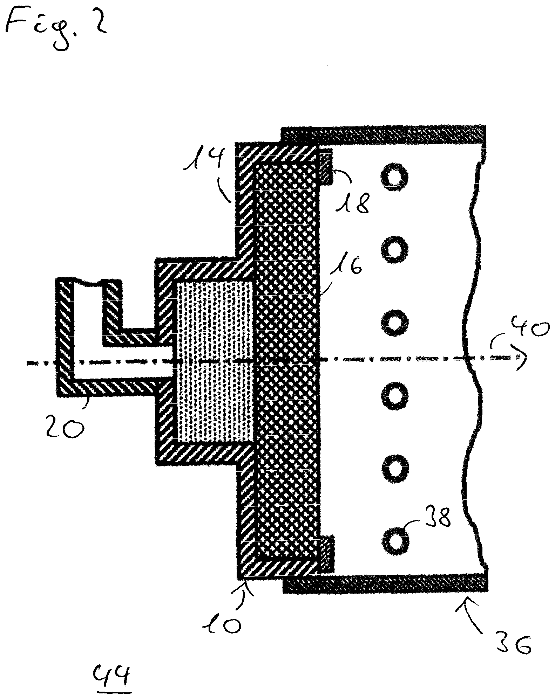

Figur 2 zeigt eine zweite seitliche Schnittansicht eines Brenners 44. Der in Figur 2 dargestellte Brenner 44 unterscheidet sich von dem aus Figur 1 vorbekannten Brenner 44 insbesondere durch die geänderte Verdampferbaugruppe 10, welche in Figur 2 stufenförmig ausgebildet ist und im Bereich der Kraftstoffzuführung 20 einen "Dom" in der Verdampferaufnahme 14 ausbildet, so dass in dem Eintrittsbereich des Brennstoffs der Verdampferkörper 16 in der axialen Richtung 40 dicker ausgebildet ist. Der Verdampferkörper 16 kann auch aus einer Vielzahl unterschiedlicher Materialien aufgebaut sein. Beispielsweise kann der Verdampferkörper 16 aus zwei unterschiedlichen Materialien aufgebaut sein, wie es in Figur 2 dargestellt ist. Im Bereich des "Doms" in der Nähe der Brennstoffzuführung 20 kann beispielsweise eine geringere Porosität vorliegen, als in dem weiter entfernt liegenden Bereich des Verdampferkörpers 16, welcher offen an das Brennrohr 36 angrenzt.

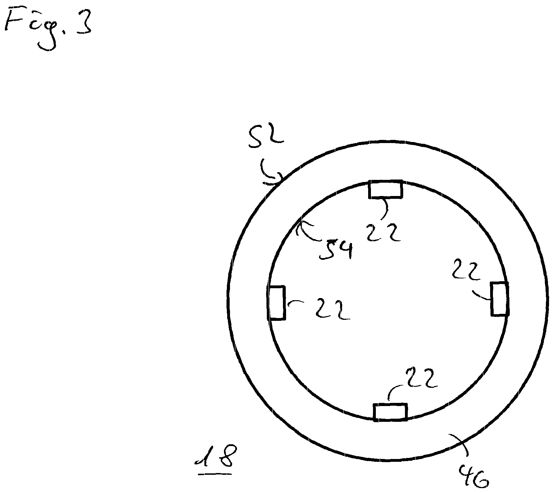

Figur 3 zeigt eine schematische Draufsicht auf ein Niederhalteelement 18. Das in Figur 3 dargestellte Niederhalteelement 18 ist insbesondere kreisringförmig ausgebildet und weist einen Außenrand 52 und einen Innenrand 54 auf. Der Außenrand 52 kann im montierten Zustand mit der Verdampferaufnahme verlötet, verschweißt oder verstemmt sein. Der Innenrand 54 kann die mindestens eine Halteklaue 22 aufweisen, wobei in Figur 3 vier gleichmäßig über den Innenrand verteilte Halteklauen 22 angedeutet sind. Es können allerdings auch mehr oder weniger Halteklauen 22 entlang des Innenrandes 54 gleichmäßig verteilt sein. Ein das Niederhalteelement 18 im Wesentlichen ausbildender Ring 46 kann gemeinsam mit den Halteklauen 22 hergestellt sein, beispielsweise durch ein einfaches Stanzen aus einem Metallblech.

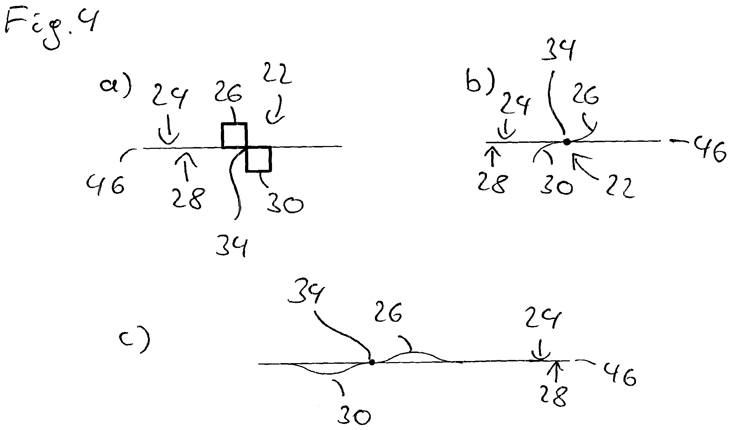

Figur 4a zeigt eine erste seitliche Schnittansicht eines Niederhalteelementes 18. Bei dem in Figur 4a dargestellten Niederhalteelement 18 ist der Ring 46 als dünne Linie in seitlicher Ansicht erkennbar. Der Ring weist eine Oberseite 24 und eine Unterseite 28 auf. Die dargestellte Halteklaue 22 umfasst zwei Vorsprünge, welche beispielsweise als rechteckige Laschen ausgebildet seien können. Ein oberes Teil 26 der Halteklaue 22 kann in Richtung der Oberseite 24 aufgestellt sein. Ein unteres Teil 30 der Halteklaue 22 kann in Richtung der Unterseite 28 aufgestellt sein. Das obere Teil 26 und das untere Teil 30, beziehungsweise die Kontur der beiden Teile 26, 30 können beispielsweise punktsymmetrisch zu einem Symmetriepunkt 34 sein, so dass die Oberseite 24 und die Unterseite 28 des Niederhalteelements 18 voneinander nicht zu unterscheiden sind. Das obere Teil 26 und das untere Teil 30 können auch unterschiedlich lang ausgebildet sein. Die in Figur 4a dargestellte Variante der Halteklaue 22 kann beispielsweise durch Verklinken der Laschen erzeugt werden. Die beiden Teile 26, 30 können direkt nebeneinander liegen oder beabstandet voneinander angeordnet sein.

Figur 4b zeigt eine zweite seitliche Schnittansicht des Niederhalteelementes 18. Bei dem in Figur 4b dargestellten Niederhalteelement 18 besteht die erkennbare flügelartige Kontur der Halteklaue 22 beispielsweise aus einer einzigen Lasche, deren gegenüberliegenden Enden in Richtung der Oberseite 24 und der Unterseite 28 aufgebogen werden, so dass auch bei dem in Figur 4b dargestellten Fall das Halteelement 22 beziehungsweise die Kontur des Halteelements 22 eine Punktsymmetrie gegenüber dem Symmetriepunkt aufweisen kann und ein oberes Teil 26 und ein unteres Teil 30 der Halteklaue erkennbar wird. Die in Figur 4b dargestellte Variante der Halteklaue 22 kann beispielsweise durch Verdrehen der Laschen erzeugt werden. Denkbar ist auch, nur eine Seite einer Lasche zu biegen, so dass das obere Teil 26 beispielsweise an einer anderen Lasche liegt als das untere Teil 30. Die beiden Teile 26, 30 können direkt nebeneinander liegen oder beabstandet voneinander angeordnet sein.

Figur 4c zeigt eine dritte seitliche Schnittansicht eines Niederhalteelementes 18. Bei der in Figur 4c dargestellten dritten Möglichkeit zur Ausgestaltung von Halteklauen 22 ist einfach der in Figur 3 dargestellte Innenrand 54 abwechselnd nach oben und unten in Richtung der Oberseite 24 und der Unterseite 28 durch Prägen aufgewölbt. Auch hier entsteht eine gewisse Symmetrie bezüglich eines Symmetriepunktes 34.

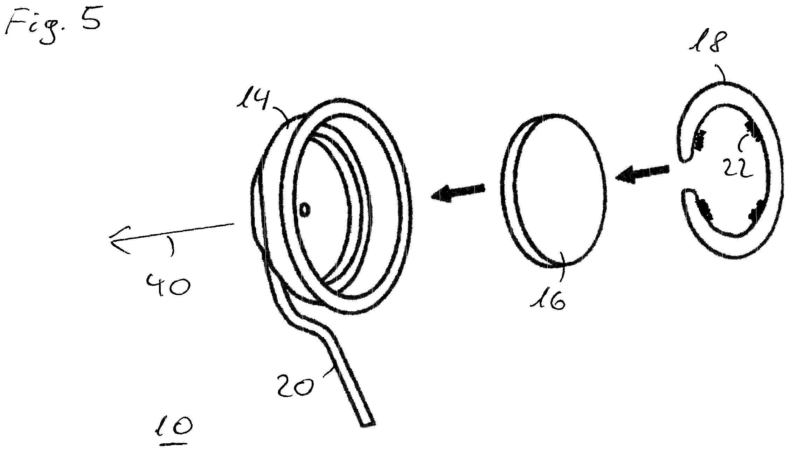

Figur 5 zeigt eine erste dreidimensionale Explosionsdarstellung einer Verdampferbaugruppe 10. Bei der in Figur 5 dargestellten Verdampferbaugruppe 10 ist auf der linken Seite zunächst die topfartig ausgebildete Verdampferaufnahme 14 erkennbar. An einem Boden dieser Verdampferaufnahme 14 ist eine Öffnung erkennbar, über die der durch die Brennstoffzuführung 20 strömende Brennstoff während des Betriebs in die Verdampferaufnahme 14 eintreten kann. Der Verdampferkörper 14 wird in der axialen Richtung 40 zunächst in die Verdampferaufnahme 14 eingelegt. Anschließend kann der Verdampferkörper 16 mit Hilfe des Niederhalteelementes 18, das mehrere Halteklauen 22 aufweist in der Verdampferaufnahme fixiert werden. Zu diesem Zweck wird das Niederhalteelement 18 ebenfalls in der axialen Richtung 40 auf die Verdampferaufnahme 14 und den Verdampferkörper 16 aufgelegt, so dass zumindest die Halteklauen 22 an dem Verdampferkörper 16 anliegen oder sogar teilweise in diesen eindringen. Anschließend kann das Niederhalteelement 18 mit der Verdampferaufnahme 14 beispielsweise umlaufend verlötet, verschweißt oder verstemmt werden. Die Öffnung im kreisringartigen Niederhalteelement 18 kann zur gezielten relativen Ausrichtung des Niederhalteelementes 18 gegenüber der Verdampferaufnahme 14 dienen.

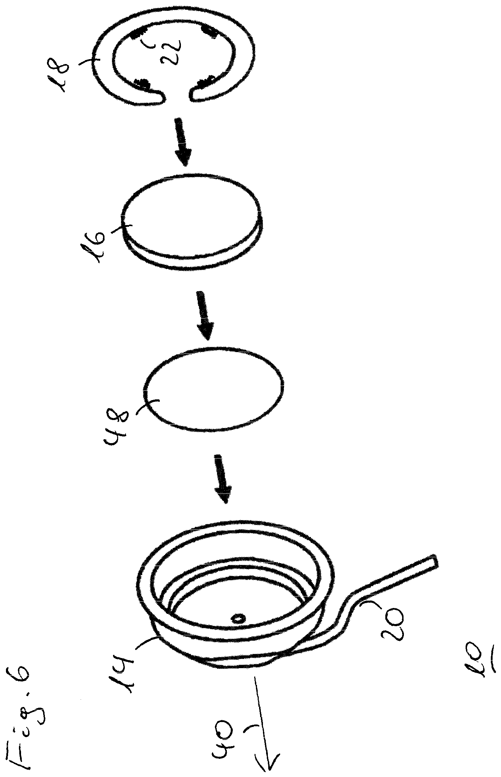

Figur 6 zeigt eine zweite dreidimensionale Explosionsdarstellung einer Verdampferbaugruppe 10. Die in Figur 6 dargestellte Verdampferbaugruppe 10 unterscheidet sich von der aus Figur 2 bereits bekannten Verdampferbaugruppe 10 durch ein zusätzliches Toleranzausgleichselement 48, welches unterhalb des Verdampferkörpers 16 in die Verdampferaufnahme 14 eingelegt wird und insbesondere sicherstellen soll, dass sich der Verdamperkörper 16 im montierten Zustand nicht von dem Boden der Verdamperaufnahme 14 abhebt, da derartige Spalte eine gleichmäßige Brennstoff-Luft-Gemischbildung verhindern können.

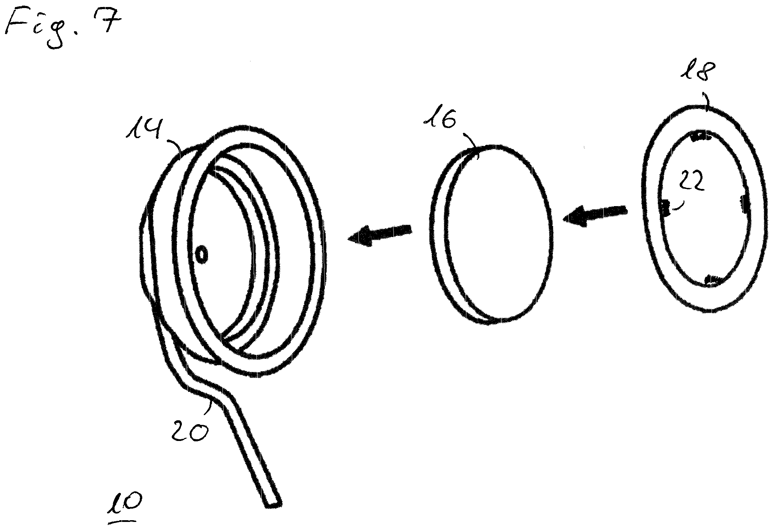

Figur 7 zeigt eine dritte dreidimensionale Explosionsdarstellung einer Verdampferbaugruppe 10. Die in Figur 7 dargestellte Verdampferbaugruppe 10 unterscheidet sich von der aus Figur 5 bereits bekannten Verdampferbaugruppe 10 insbesondere dadurch, dass das Niederhalteelement 18 einen geschlossenen Ring ausbildet, während das in Figur 5 dargestellte Niederhalteelement 18 einen offenen Ring darstellt.

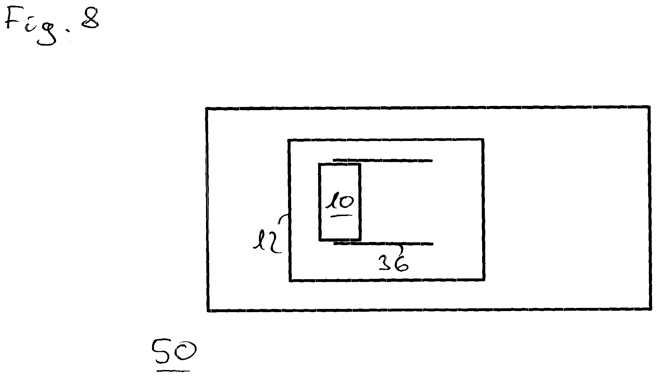

Figur 8 zeigt eine schematische Darstellung eines Fahrzeugs mit einem Fahrzeugheizgerät. Das in Figur 8 dargestellte Fahrzeug 50 umfasst ein Fahrzeugheizgerät 12 mit einer Verdampferbaugruppe 10 an der ein Brennrohr 36 angeordnet ist. Von der Verdampferbaugruppe 10 verdampfter Brennstoff strömt gemeinsam mit Verbrennungsluft in das Brennrohr 36 und wird dort unter Wärmeentwicklung verbrannt. Die entstehende Wärme kann beispielsweise zur Erwärmung eines Fluidstroms genutzt werden, welcher wiederum beispielsweise einen Fahrzeuginnenraum aufheizt.

Die in der vorstehenden Beschreibung, in den Zeichnungen sowie in den Ansprüchen offenbarten Merkmale der Erfindung können sowohl einzeln als auch in beliebiger Kombination für die Verwirklichung der in den Ansprüchen definierten Erfindung wesentlich sein.

### Bezugszeichenliste

- 10: Verdampferbaugruppe
- 12: Fahrzeugheizgerät
- 14: Verdampferaufnahme
- 16: Verdampferkörper
- 18: Niederhalteelement
- 20: Brennstoffzuführung
- 22: Halteklaue
- 24: Oberseite
- 26: oberes Teil
- 28: Unterseite
- 30: unteres Teil
- 34: Symmetriepunkt
- 36: Brennrohr
- 38: Luftdurchlass
- 40: axiale Richtung
- 42: radiale Richtung
- 44: Brenner
- 46: Ring
- 48: Toleranzausgleichselement
- 50: Fahrzeug
- 52: Außenrand
- 54: Innenrand

## Patentansprüche

1. Verdampferbaugruppe (10), insbesondere für ein brennstoffbetriebenes Fahrzeugheizgerät (12), umfassend
- eine topfartige Verdampferaufnahme (14),
- einen in die topfartige Verdampferaufnahme (14) eingelegten Verdampferkörper (16),
- ein plattenartig ausgebildetes Niederhalteelement (18), das an der Verdampferaufnahme (14) fixiert ist und den Verdampferkörper (16) in der Verdampferaufnahme (14) festlegt, und
- wobei das plattenartig ausgebildete Niederhalteelement (18) zumindest eine Halteklaue (22) aufweist,
**dadurch gekennzeichnet, dass** die zumindest eine Halteklaue (22) auf einer Oberseite (24) des plattenartig ausgebildeten Niederhalteelementes (18) ein oberes Teil (26) aufweist und auf einer Unterseite (28) des plattenartig ausgebildeten Niederhalteelementes (18) ein unteres Teil (30) aufweist, und
- dass das obere Teil (26) und das untere Teil (30) von dem plattenartig ausgebildeten Niederhalteelement (18) fortweisen.

2. Verdampferbaugruppe (10) nach Anspruch 1, wobei das plattenartig ausgebildete Niederhalteelement (18) mit der Verdampferaufnahme (14) stoffschlüssig verbunden ist oder gegen die Verdampferaufnahme (14) verstemmt ist.

3. Verdampferbaugruppe (10) nach Anspruch 1 oder 2, wobei das plattenartig ausgebildete Niederhalteelement (18) im Wesentlichen ringscheibenförmig ist.

4. Verdampferbaugruppe (10) nach einem der Ansprüche 1 bis 3, wobei das untere Teil (30) der zumindest einen Halteklaue (22) an dem Verdampferkörper (16) in der Verdampferaufnahme (14) anliegt und/oder in den Verdampferkörper (16) eindringt.

5. Verdampferbaugruppe (10) nach einem der Ansprüche 1 bis 4, wobei das obere Teil (26) und das untere Teil (30) die gleiche Form haben.

6. Brennstoffbetriebenes Fahrzeugheizgerät (12) mit einer Verdampferbaugruppe (10) nach einem der Ansprüche 1 bis 5.

## Claims

1. Evaporator assembly (10), in particular for a fuel-operated vehicle heater (12), comprising
- a pot-like evaporator reception (14),
- an evaporator body (16) inserted into the pot-like evaporator reception (14),
- a plate-like designed hold-down element (18), which is fixed to the evaporator reception (14) and fixes the evaporator body (16) in the evaporator reception (14), and
- wherein the plate-like designed hold-down element (18) has at least one retaining claw (22),
**characterized in that** the at least one retaining claw (22) has an upper part (26) on an upper side (24) of the plate-like designed hold-down element (18) and a lower part (30) on a lower side (28) of the plate-like designed hold-down element (18), and
- that the upper part (26) and the lower part (30) point away from the plate-like designed hold-down element (18).

2. Evaporator assembly (10) according to claim 1, wherein the plate-like designed hold-down element (18) is connected to the evaporator reception (14) in a substance-bonded manner or is caulked against the evaporator reception (14).

3. Evaporator assembly (10) according to claim 1 or 2, wherein the plate-like designed hold-down element (18) is substantially annular-disk-like.

4. Evaporator assembly (10) according to one of claims 1 to 3, wherein the lower part (30) of the at least one retaining claw (22) abuts against the evaporator body (16) in the evaporator reception (14) and/or penetrates into the evaporator body (16).

5. Evaporator assembly (10) according to one of claims 1 to 4, wherein the upper part (26) and the lower part (30) have the same shape.

6. Fuel-operated vehicle heater (12) having an evaporator assembly (10) according to one of claims 1 to 5.

## Revendications

1. Module d'évaporateur (10), notamment pour un appareil de chauffage de véhicule (12) fonctionnant au carburant, comprenant
- un logement d'évaporateur en forme de pot (14),
- un corps d'évaporateur (16) inséré dans le logement d'évaporateur en forme de pot (14),
- un élément serre-flanc configuré en forme de plaque (18), qui est fixé sur le logement d'évaporateur (14) et immobilise le corps d'évaporateur (16) dans le logement d'évaporateur (14), et
- dans lequel l'élément serre-flanc configuré en forme de plaque (18) présente au moins une griffe de maintien (22),
**caractérisé en ce que** l'au moins une griffe de maintien (22) présente une partie supérieure (26) sur un côté supérieur (24) de l'élément serre-flanc configuré en forme de plaque (18) et présente une partie inférieure (30) sur un côté inférieur (28) de l'élément serre-flanc configuré en forme de plaque (18), et
- **en ce que** la partie supérieure (26) et la partie inférieure (30) s'étendent à partir de l'élément serre-flanc configuré en forme de plaque (18).

2. Module d'évaporateur (10) selon la revendication 1, dans lequel l'élément serre-flanc configuré en forme de plaque (18) est relié par une liaison de matière au logement d'évaporateur (14) ou est maté contre le logement d'évaporateur (14).

3. Module d'évaporateur (10) selon la revendication 1 ou 2, dans lequel l'élément serre-flanc configuré en forme de plaque (18) a essentiellement la forme d'un disque annulaire.

4. Module d'évaporateur (10) selon l'une quelconque des revendications 1 à 3, dans lequel la partie inférieure (30) de l'au moins une griffe de maintien (22) s'applique contre le corps d'évaporateur (16) dans le logement d'évaporateur (14) et/ou pénètre dans le corps d'évaporateur (16).

5. Module d'évaporateur (10) selon l'une quelconque des revendications 1 à 4, dans lequel la partie supérieure (26) et la partie inférieure (30) ont la même forme.

6. Appareil de chauffage de véhicule (12) fonctionnant au carburant, comprenant un module d'évaporateur (10) selon l'une quelconque des revendications 1 à 5.
